# EUROPEAN PATENT APPLICATION

(11) **EP 1 816 393 A1**
(43) Date of publication of application: **08.08.2007**
(21) Application number: 07002341.1
(22) Date of filing: 02.02.2007
(51) Int. Cl.: F21V 5/00, F21V 7/00

(54) **Lighting device**

(30) Priority: 02.02.2006 JP 2006025391
(71) Applicant: YAMAHA HATSUDOKI KABUSHIKI KAISHA, Iwata-shi, Shizuoka-ken 438-8501 (JP)
(72) Inventor: Wakamatsu, Katsumitsu, Iwata-shi Shizuoka-ken 438-8501 (JP); Nakamura, Kazuo, Iwata-shi Shizuoka-ken 438-8501 (JP); Ozawa, Toshiaki, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a lighting device (43), in particular for a vehicle, comprising a light source (70) and a light separating means (71,72) which is configured to separate light from the light source (43) into at least one set point (a) different from the light source (70), said set point (a) having a higher light intensity than a surrounding area and appearing as center of an imaginary light source (e).

## Description

The present invention relates to a lighting device, in particular for a vehicle, comprising a light source.

Vehicles such as automobiles, motorcycles, etc. are in some cases provided with a tail light, in which a plurality of light sources are arranged in, for example, one light body, from the viewpoint of heightening visibility from the rear of a vehicle and improving an outward appearance at the time of lighting (see JP-A-2004-193026).

By the way, when a plurality of light sources are arranged in one light body as in the conventional tail light, an improvement in visibility and outward appearance can be achieved but there is caused a problem of an increase in part cost and large-sizing of a light body.

The invention has been thought of in view of the conventional situation and has its objective to provide a lighting device, in which an improvement in visibility and outward appearance can be achieved without causing an increase in cost and making a light body large in size.

According to the present invention, said objective is solved by a lighting device, in particular for a vehicle, comprising a light source and a light separating means which is configured to separate light from the light source into at least one set point different from the light source, said set point having a higher light intensity than a surrounding area and appearing as center of an imaginary light source.

Preferably, the light separating means is configured to separate light from the light source mainly into at least two different set points which appear as centers of two different imaginary light sources, each of the set points having a higher light intensity than the surrounding area.

Further, preferably the light separating means comprises a reflector, by which light from the light source is reflected, and/or a lens, through which light is transmitted, such that the light intensity decreases form the set point of an imaginary light source towards an outer area of said imaginary light source.

Still further, preferably a light shielding portion is provided on a portion of the lens, and said light shielding portion is opposed to the light source so as to lower light transmittance relative to other portions of the lens.

Yet further still, preferably the light source and the light shielding portion are separated from each other in longitudinal direction, the two set points are separated from each other in radial direction, and the light shielding portion is interposed between the set points.

According to a preferred embodiment, the reflector comprises a plurality of partitioned reflective surfaces composed of convex or concave ridges and the respective reflective surfaces are structured so that a reflective surface positioned close to the set point is larger in effective reflective area than a reflective surface positioned distant from the set point.

Preferably, the lens comprises a plurality of partitioned light transmitting surfaces composed of convex or concave ridges and the respective light transmitting surfaces are structured so that a light transmitting surface positioned close to the set point is larger in effective light transmitting area than a light transmitting surface positioned distant from the set point.

Further, preferably convex or concave ridges of the respective reflective surfaces or of the respective light transmitting surfaces extend longitudinally and laterally so as to form intersecting portions with different effective areas, and an intersecting portion close to the set point is larger in effective area than an intersecting portion distant from the set point.

Still further, preferably a combination of the reflector and the lens is constructed to set the light intensity according to a distance from the set point.

Yet further still, preferably the reflector is formed with a plurality of longitudinally or laterally extending reflective surfaces composed of convex or concave ridges, the lens is formed with a plurality of laterally or longitudinally extending light transmitting surfaces composed of convex or concave ridges, and the convex or concave ridges on the reflective surfaces and the light transmitting surfaces are structured so that intersecting portions of the convex or concave ridges positioned close to the set point are larger in effective reflective and light transmitting area than intersecting portions of the convex or concave ridges positioned distant from the set point.

Preferably, a vehicle is provided, in particular motorcycle, having a tail light comprising a lighting device according to one of the above embodiments.

Preferably, two set points are provided on both sides of the light shielding portion in a vehicle width direction such that both set points interpose said light shielding portion.

In the following, the present invention is explained in greater detail with respect to several embodiments thereof in conjunction with the accompanying drawings, wherein:
- Fig. 1: is a side view showing a motorcycle provided with a tail light (lamp) according to a first embodiment;
- Fig. 2: is a rear view showing a motorcycle, on which the tail light is arranged;
- Fig. 3: is a side view showing a vehicle body, on which the tail light is arranged;
- Fig. 4: is a rear view showing the tail light;
- Fig. 5: is a plan view showing the tail light;
- Fig. 6: is a rear view showing a state, in which an outer lens of the tail light is removed;
- Fig. 7: is a plan view (cross sectional view taken along the line VII-VII in Fig. 4) showing a cross section of the tail light;
- Fig. 8: is a side view (cross sectional view taken along the line VIII-VIII in Fig. 4) showing a cross section of the tail light;
- Fig. 9: is a side view (cross sectional view taken along the line IX-IX in Fig. 4) showing a cross section of the tail light;
- Fig. 10: is a rear view showing a tail light according to a modification of the embodiment;
- Fig. 11: is a plan view showing a cross section of the tail light according to the modification;
- Fig. 12: is a rear view showing a tail light according to a second embodiment;
- Fig. 13: is a plan view showing a cross section of the tail light;
- Fig. 14: is a rear view showing a tail light according to a third embodiment; and
- Fig. 15: is a plan view showing a cross section of the tail light.

### Description of Reference Numerals and Signs:

43: tail light (lamp)
70: lamp bulb (light source)
71: reflector
72: inner lens
72c: light shielding portion
a: set point
b1 to b4, b1' to b4': reflective surface
c1 to c4, c1' to c4': light transmitting surface
d1 to dn: intersecting portion
f1 to f4, g1 to g4: reflective surface
h1 to h4, i1 to i4: light transmitting surface
h1 to hn: intersecting portion
k1 to kn: intersecting portion

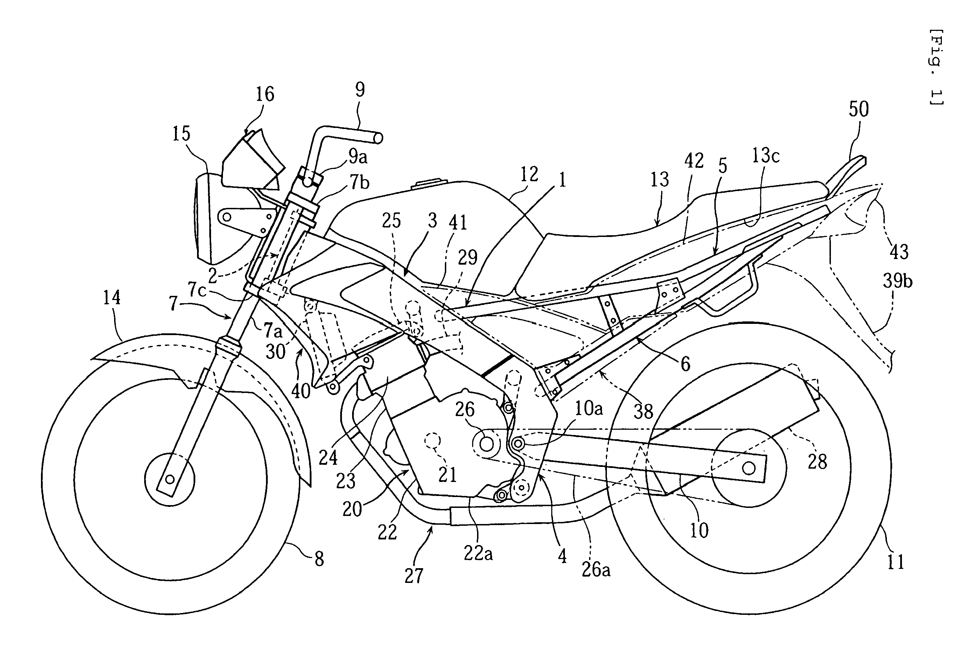

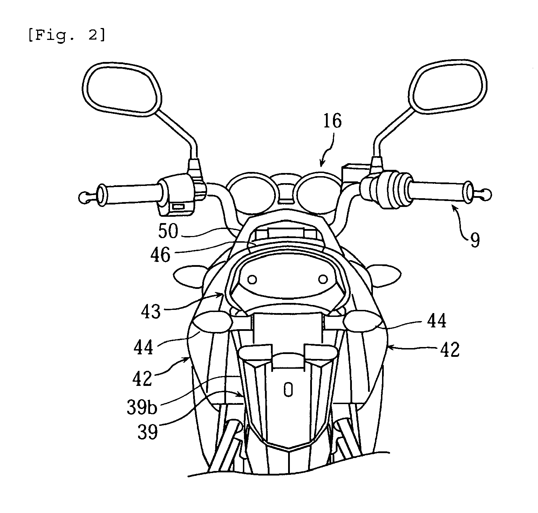

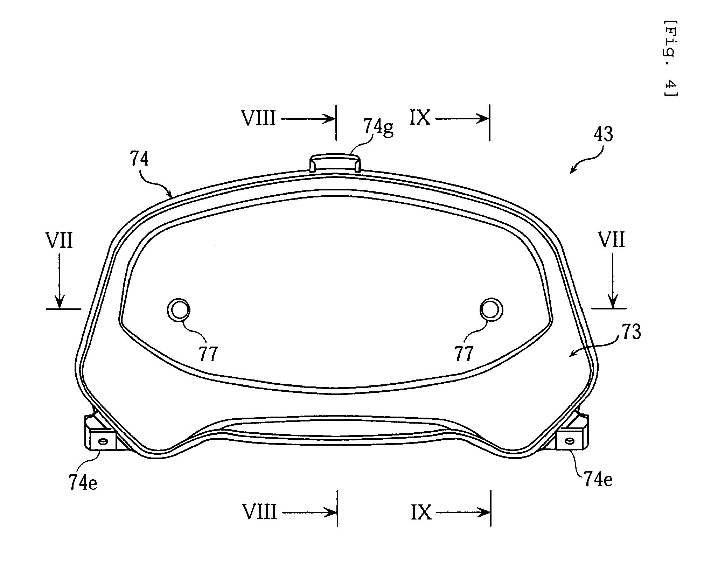

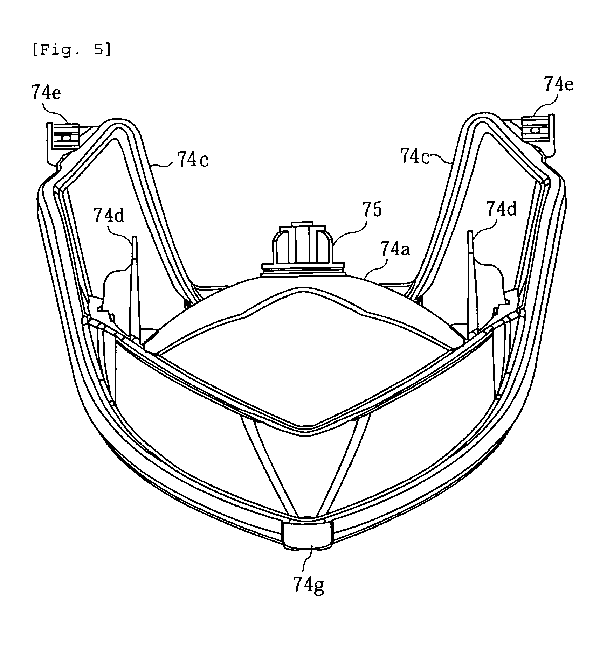

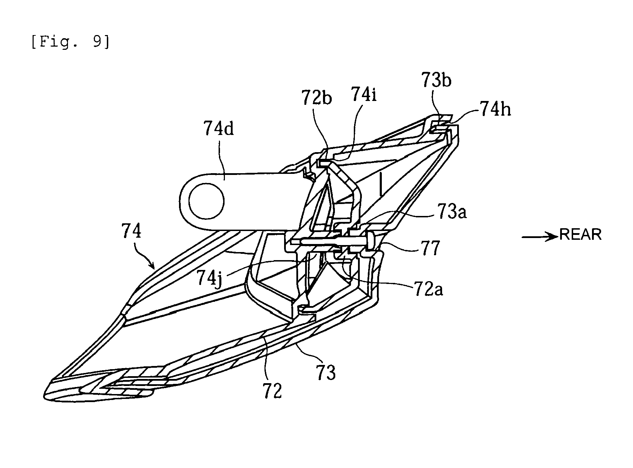

Figs. 1 to 9 are views illustrating a motorcycle provided with a lamp according to a first embodiment. In addition, front and rear, and left and right referred to in the embodiment mean front and rear, and left and right as seen in a state of being seated on a seat.

In the drawings, the reference numeral 1 denotes a body frame of a motorcycle. The body frame 1 comprises a head pipe 2 positioned at a front end thereof, left and right tank rails 3, 3 extending obliquely downward toward the rear of a vehicle from the head pipe 2, left and right rear arm brackets 4, 4 contiguous to rear ends of the left and right tank rails 3, 3 to extend downward, left and right seat rails 5, 5 extending obliquely upward toward the rear of a vehicle from the left and right tank rails 3, 3, and left and right seat stays 6, 6 joined together bridging rear portions of the left and right seat rails 5, 5 and the left and right rear arm brackets 4, 4.

A front fork 7 is supported on the head pipe 2 to enable steering left and right. A front wheel 8 is journaled by a lower end of the front fork 7, to an upper end of which a steering handle 9 is mounted. Also, a front fender 14 is mounted to the front fork 7 to cover an upper portion of the front wheel 8.

A headlight 15 is arranged on the front fork 7 to be positioned in front of the head pipe 2, and a meter device 16 including a speed meter, a tachometer, etc. is arranged above the headlight 15.

A front end of a rear arm 10 is pivotally supported on the left and right rear arm brackets 4, 4 through a pivot shaft 10a to be able to swing vertically. A rear wheel 11 is journaled by a rear end of the rear arm 10 and a rear suspension (not shown) is arranged between the rear arm 10 and the rear arm brackets 4.

A fuel tank 12 is mounted on the left and right tank rails 3, 3 and a double ride seat 13 is mounted on the left and right seat rails 5, 5 rearwardly of the fuel tank 12. A glove bar 50 grasped by a rear seat occupant is arranged at a rear end of the seat 13.

A water-cooled 4-cycle engine 20 is mounted below the left and right tank rails 3, 3. The engine 20 is structured such that a cylinder block 23, a cylinder head 24, and a head cover 25 are laminated on a crank case 22, in which a crank shaft 21 arranged horizontally in a vehicle width direction is accommodated, to be joined thereto by bolting.

A transmission case 22a housing therein a transmission (not shown) is formed integrally and rearwardly of the crank case 22. An output shaft 26 is arranged on the transmission case 22a to take out engine rotation through the transmission, and the rear wheel 11 is rotationally driven through a chain 26a by the output shaft 26.

An exhaust pipe 27 is connected to a front wall of the cylinder head 24, the exhaust pipe 27 passing below the engine 20 to be connected to a muffler 28 arranged laterally rightwardly of the rear wheel 11. An intake pipe 29 is connected to a rear wall of the cylinder head 24, the intake pipe 29 extending between the left and right tank rails 3, 3 to be connected to an air cleaner (not shown). Also, a radiator 30 is arranged forwardly upwardly of the engine 20 to maintain an engine cooling water at a predetermined temperature.

Front ends of the left and right tank rails 3, 3 and an outside of the radiator 30 are covered by front covers 40, 40 made of a resin. The front covers 40, 40 function as an air scoop to introduce a travel wind into the radiator 30.

The left and right seat rails 5, 5 and outsides of the seat stays 6, 6 are covered by left and right side covers 38, 38 made of a resin. The left and right side covers 38 are partitioned into front side covers 41 and rear side covers 42.

The left and right rear side covers 42 extend in a manner to cover regions between left and right, lower edges 13c of the seat 13 and the seat stays 6 and to be streamlined in a vehicle longitudinal direction.

Rear fenders 39 covering an upper portion of the rear wheel 11 are arranged on undersides of the left and right rear side covers 42, 42. The rear fenders 39 comprise front fender portions 39a extending in the vehicle longitudinal direction in a manner to cover lower sides of the left and right seat stays 6, 6, and rear fender portions 39b extending obliquely rearwardly and downwardly from rear ends of the front fender portions 39a.

Rear ends 42a, 42a of the left and right rear side covers 42, 42 extend to be positioned rearwardly of a rear edge of the seat 13. A rear cover 46 is arranged between the left and right rear ends 42a, 42a to connect the rear ends 42a together to make the same a substantially continuous surface.

A tail light (lamp) 43 is arranged in an opening surrounded by the rear cover 46, the left and right rear ends 42a, 42a, and the rear fender portions 39b. Also, left and right flasher lights 44, 44 are arranged on the rear fender portions 39b below the tail light 43.

As viewed from the rear of a vehicle, the tail light 43 is substantially elliptical-shaped to have a major axis directed in the vehicle width direction and to be sized to extend over a whole width between inner edges of the left and right rear side covers 42, 42.

The tail light 43 comprises one lamp bulb (light source) 70, which makes a light source, a reflector 71, by which light from the lamp bulb 70 is reflected toward the rear of a vehicle, an inner lens 72, through which light reflected from the reflector 71 is permitted to transmit, and an outer lens 73, which covers the inner lens 72 from the rear of a vehicle.

The inner lens 72 is made of a red-colored resin. The outer lens 73 is made of an achromatic resin, only the outer lens 73 being exposed outside.

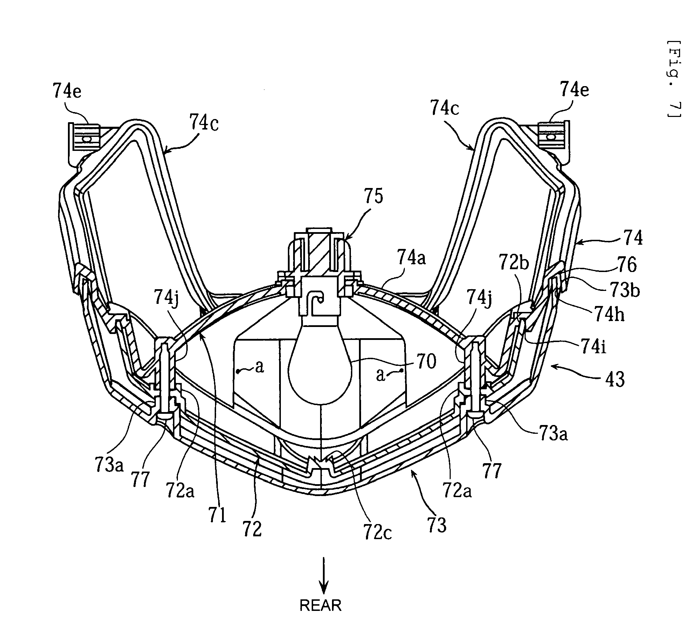

The reflector 71 is formed to make a tail cover 74 made of a resin. The tail cover 74 comprises a reflector recess 74a, which is substantially semi-circular as viewed in transverse section (see Fig. 7) to extend in the vehicle width direction and to be opened rearward, and left and right cover portions 74c, 74c extending toward the front of a vehicle from left and right ends of the reflector recess 74a.

The reflector 71 is formed by covering and forming a reflective surface on an inner surface of the reflector recess 74a by means of chrome plating, or the like. A socket 75 is mounted centrally of the reflector recess 74a in the vehicle width direction and the lamp bulb 70 is mounted to the socket 75 to be detachable from the rear. A connector 75b is connected to the socket 75 via a power cable 75a. When a rider performs a braking operation, the lamp bulb 70 is lighted.

Mount seats 74e, 74e and 74f, 74f, respectively, are formed on front ends and rear ends of the left and right cover portions 74c, 74c and forwardly extending mount pieces 74d, 74d are formed on left and right edges of the reflector recess 74a. A positioning portion 74g is formed on upper edges of rear ends of the cover portions 74c.

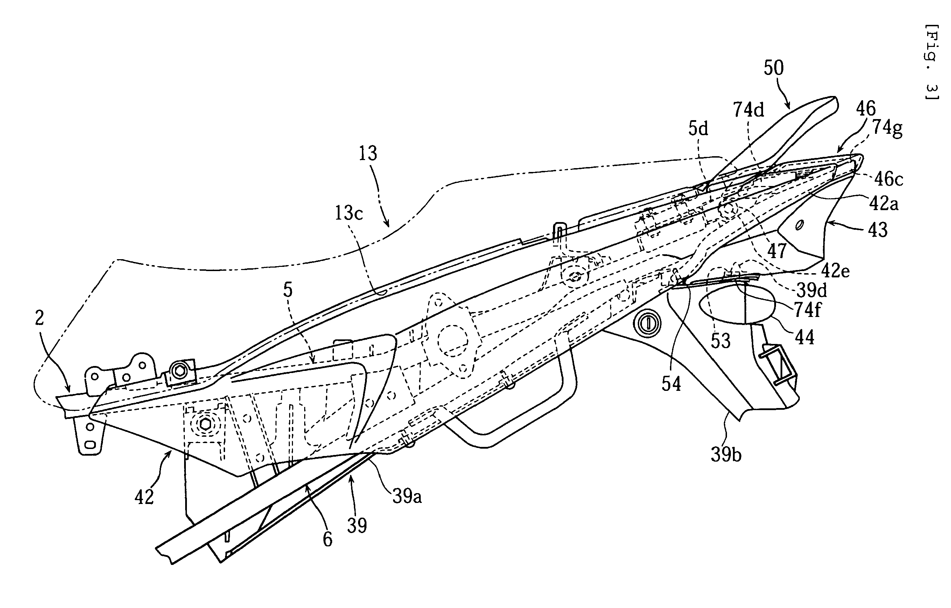

The tail cover 74 is mounted to a vehicle body as shown in Fig. 3 with the following structure. More specifically, the tail cover 74 is mounted by engaging the positioning portion 74g with an engagement projection 46c of the rear cover 46 from the rear of a vehicle to position the same, engaging the left and right mount pieces 74d, 74d with a cross member 5d, which connects the left and right seat rails 5, 5 mutually with a grommet 47 therebetween, by projections 42e, 42e of the left and right rear side covers 42, 42, engaging projections 39d of the rear fender portions 39b with the left and right rear mount seats 74f, 74f with a grommet 53 therebetween, and clamping and fixing the left and right front mount seats 74e, 74e together with the rear fender portions 39b to the left and right rear side covers 42, 42 by mount screws 54, 54, which are inserted from under.

An outer peripheral engagement groove 74h is formed on an outer peripheral edge of the tail cover 74 to extend therealong. An inner peripheral engagement groove 74i is formed on a peripheral edge of an opening of the reflector recess 74a.

Rearwardly extending boss portions 74j, 74j are formed on left and right ends of the reflector recess 74a. Also, mount seats 72a, 72a and 73a, 73a in the form of a bottomed cylinder are formed on the inner lens 72 and the outer lens 73 to forwardly project in opposition to the left and right boss portions 74j, 74j.

The inner lens 72 and the outer lens 73 are mounted to the tail cover 74 in the following manner. More specifically, the lenses are mounted detachably to the tail cover 74 by engaging an outer peripheral edge 72b of the inner lens 72 into the inner peripheral engagement groove 74i, engaging an outer peripheral edge 73b of the outer lens 73 into the outer peripheral engagement groove 74h with a sealing member 76 therebetween, and inserting left and right mount bolts 77, 77 into the mount seats 72a, 72a and 73a, 73a from the rear to clamp and fix the same to the boss portions 74j, 74j.

A light shielding portion 72c is formed centrally in the vehicle width direction to be opposed to the lamp bulb 70 of the inner lens 72. The light shielding portion 72c is substantially saw-toothed as viewed in a vertically extending cross section and structured to be lower in light transmittance than other portions of the inner lens 72 to prevent light from the lamp bulb 70 from transmitting to the rear. Thereby, as viewed from the rear of a vehicle, the lamp bulb 70 is covered by the light shielding portion 72c to become hard to see.

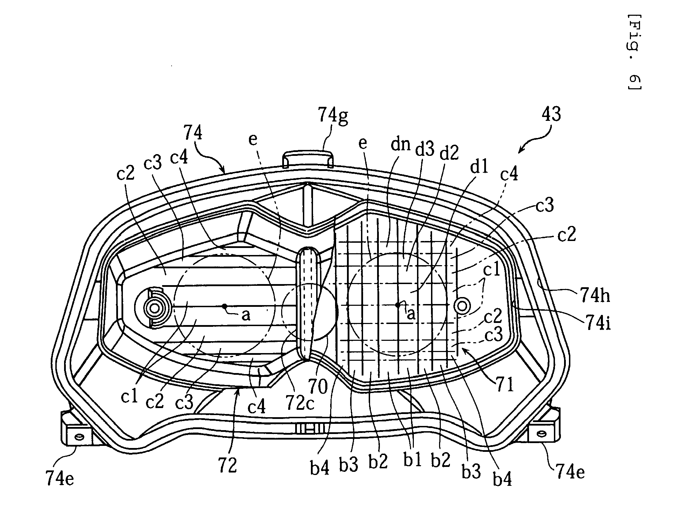

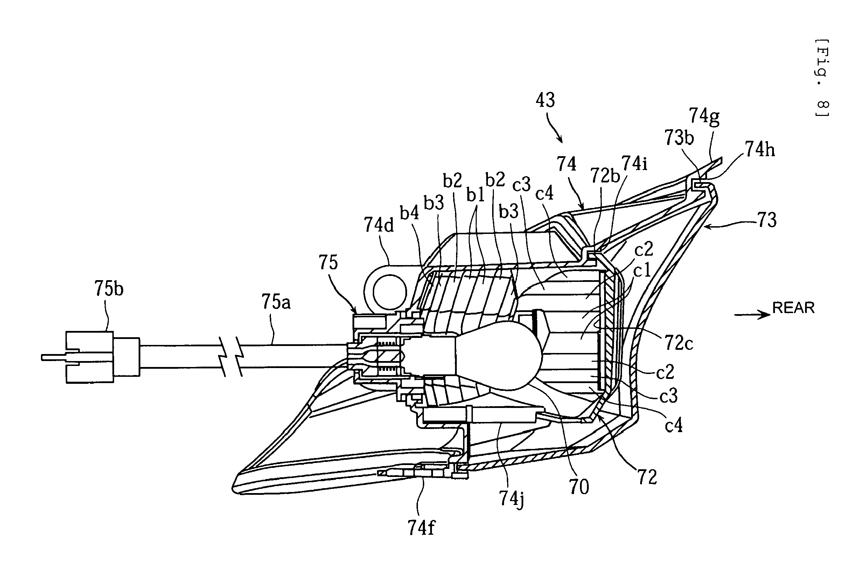

As shown in Figs. 6 and 8, the tail light 43 is structured so that light from the lamp bulb 70 is varied in flux density (light intensity) about left and right set points a, a distant from the lamp bulb 70 and according to a distance from the left and right set points a, more specifically, the set points a are maximum in flux density and the flux density is decreased with a distance from the set point a. The left and right set points a are set on left and right sides, which interpose the light shielding portion 72c. In general, it should be noted that the light intensity corresponds to the flux density of the light, defining a radiant energy passing through a unit area in a unit time.

More specifically, a reflective surface formed on the reflector 71 and a light transmitting surface formed on the inner lens 72 are combined whereby the flux density is varied according to a distance from the left and right set points a, and the construction is as follows specifically.

As viewed from the rear of a vehicle, the reflector 71 is formed with a plurality of reflective surfaces b1, b2, b3, b4, which define longitudinally (vertically) extending convex ridges. The reflective surfaces b1, b2, b3, b4 of the reflector 71 are structured so that light from the lamp bulb 70 is reflected toward the rear of a vehicle, and structured so that an effective area, in which the light is reflected effectively toward the rear of a vehicle, becomes maximum on the reflective surface b1 closest to the set points a and is gradually decreased on b2, b3, b4 with a distance therefrom. That is, a reflected light from the reflective surface b1 closest to the set points a is maximum in flux density and a reflected light from the respective reflective surfaces b2, b3, b4, which are distant outwardly left and right from the set points a, is successively decreased in flux density.

The inner lens 72 is formed with a plurality of light transmitting surfaces c1, c2, c3, c4, which define laterally (in the vehicle width direction) extending convex ridges. The respective light transmitting surfaces c1, c2, c3, c4 of the inner lens 72 are structured so that light from the reflective surface of the reflector 71 is permitted to transmit therethrough, and structured so that an effective area, in which the light is transmitted effectively, becomes maximum on the light transmitting surface c1 closest to the set points a and is gradually decreased on c2, c3, c4 with a distance therefrom. That is, a transmitted light from the light transmitting surface c1 close to the set points a is maximum in flux density and a transmitted light from the respective light transmitting surfaces c2, c3, c4, which are distant upward and downward from the set points a, is successively decreased in flux density.

When the respective reflective surfaces b1 to b4 of the reflector 71 and the respective light transmitting surfaces c1, c2, c3, c4 of the inner lens 72 are overlapped in a longitudinal direction, lattice-shaped intersecting portions d1, d2, d3, ..., dn having different areas are formed. With the respective intersecting portions d1, d2, d3, ..., dn, the intersecting portion d1 positioned close to the set points a is larger in area than the intersecting portions d2, ..., dn positioned distant from the set points a. More specifically, the intersecting portions d1, d2, d3, ..., dn are decreased in area successively as it goes outward in a vertical direction and outward in the vehicle width direction with the set points a as centers. Thereby, as viewed from the rear of a vehicle, substantially circular-shaped light sources (imaginary light sources) e, e centering on the left and right set points a, a are formed. This way, light from the one lamp bulb 70, respectively physical light source, is separated by the lens 72 and/or the reflector 71 so as to form two imaginary light sources e, e appearing to the viewer of the lamp, respectively of the lighting device.

Since the tail light 43 according to the embodiment is structured so that light from the lamp bulb 70 is reflected toward the rear of a vehicle so that the left and right set points a, a distant from the lamp bulb 70 are maximum in flux density, an outward appearance, in which the light sources e, e centering on the left and right set points a, a distant from the lamp bulb 70 seem to be present and which is not present in the related art, can be obtained with one lamp bulb 70, so that an improvement in visibility and outward appearance can be achieved without causing an increase in cost and making the tail light 43 large in size.

According to the embodiment, since the light shielding portion 72c being lower in light transmittance than other portions is formed centrally in the vehicle width direction to be opposed to the lamp bulb 70 of the inner lens 72, the lamp bulb 70 is covered by the light shielding portion 72c to become hard to see as viewed from the rear of a vehicle and the left and right set points a, a further surely look to be light sources, so that an outward appearance of two light type can be obtained with one lamp bulb 70.

Since the left and right set points a, a are provided on both sides in the vehicle width direction with the light shielding portion 72c therebetween, it is possible to further surely obtain an outward appearance like two light type one.

According to the embodiment, since the reflective surfaces b1 to b4 formed on the reflector 71 and the light transmitting surfaces c1 to c4 formed on the inner lens 72 are combined to provide for regulation so that the set points a, a become maximum in flux density, the set points a, a can surely look to be light sources with a simple construction.

More specifically, a plurality of longitudinally extending reflective surfaces b1, b2, b3, b4 are formed on the reflector 71, the reflective surface b1 close to the set points a is made maximum in effective reflection area, the reflective surfaces b2, b3, b4, which are distant from the set points a, are decreased in effective reflection area, the inner lens 72 is formed with a plurality of light transmitting surfaces c1, c2, c3, c4, which extend laterally, the light transmitting surface c1 positioned close to the set points a is maximum in effective light transmitting area, and the light transmitting surfaces c2, c3, c4, which are distant from the set points a, are decreased in effective light transmitting area, so that the intersecting portion d1 positioned close to the set points a among the intersecting portions d1, d2, d3, ..., dn of the respective reflective surfaces b1 to b4 and the respective light transmitting surfaces c1 to c4 becomes maximum both in effective reflection area and effective light transmitting area, and the intersecting portions d2, ..., dn positioned distant from the set points a are decreased both in effective reflection area and effective light transmitting area, with the result that it is possible to realize the light sources e, e centering on the left and right set points a, a.

In addition, while the embodiment has been described with respect to the case where the intersecting portion d1 positioned close to the set points a is larger in effective area composed of effective reflection area and effective light transmitting area than the intersecting portions d2, ..., dn positioned distant from the set points a, the embodiment is not limited thereto but various modifications are conceivable. For example, the intersecting portion positioned close to the set points can be made smaller in effective area than the intersecting portions positioned on the periphery of the set points and the intersecting portions positioned outside the periphery of the set points can be made substantially equal in effective area to the intersecting portion positioned close to the set points. In such case, a ring-shaped light source centering on the set points is formed, so that it is possible to obtain an outward appearance, which is rich in change.

While according to the embodiment, the reflector 71 is formed with the reflective surfaces b1, b2, b3, b4, which comprise longitudinally extending convex ridges, and the inner lens 72 is formed with the light transmitting surfaces c1, c2, c3, c4, which comprise laterally extending convex ridges, the embodiment is not limited thereto.

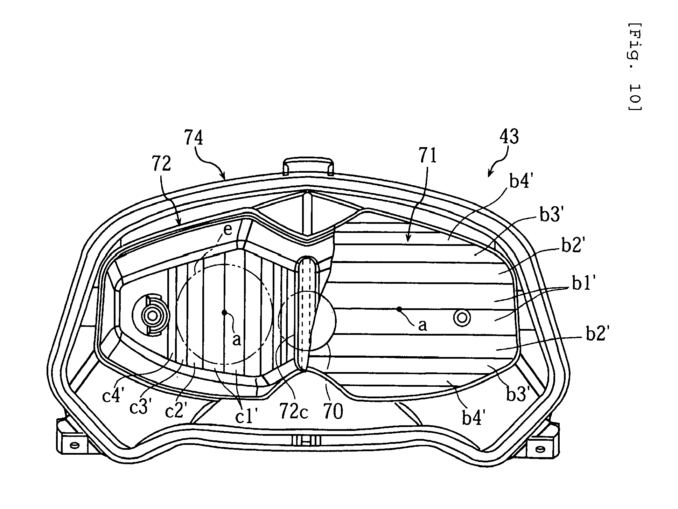

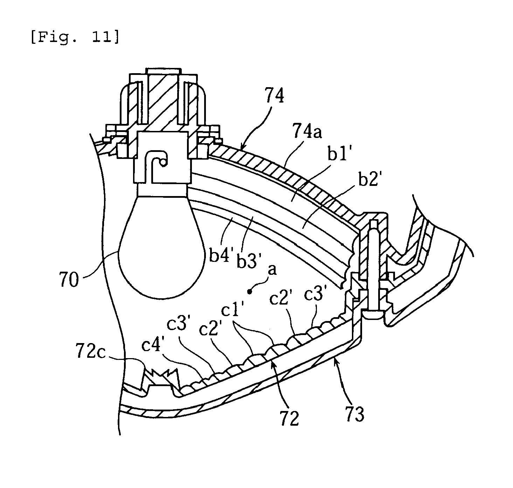

Figs. 10 and 11 show a modification of the first embodiment. This is an example, in which a reflector 71 is formed with reflective surfaces b1', b2', b3', b4', which comprise laterally extending convex ridges, and an inner lens 72 is formed with light transmitting surfaces c1', c2', c3', c4', which comprise longitudinally extending convex ridges. In this case, substantially the same effect as that in the above embodiment is produced.

Further, while the embodiment adopts a construction, in which a combination of the reflector 71 and the inner lens 72 provides for regulation in flux density, the embodiment is not limited thereto but it is possible to adopt a construction, in which at least one of a reflector 71 and a inner lens 72 provides for regulation in flux density.

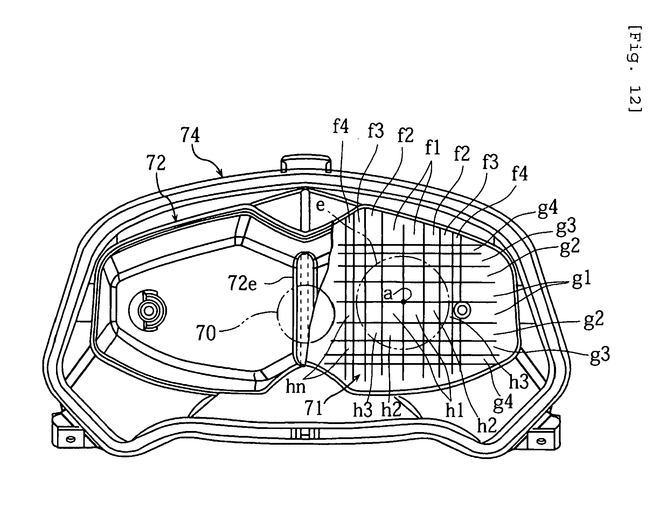

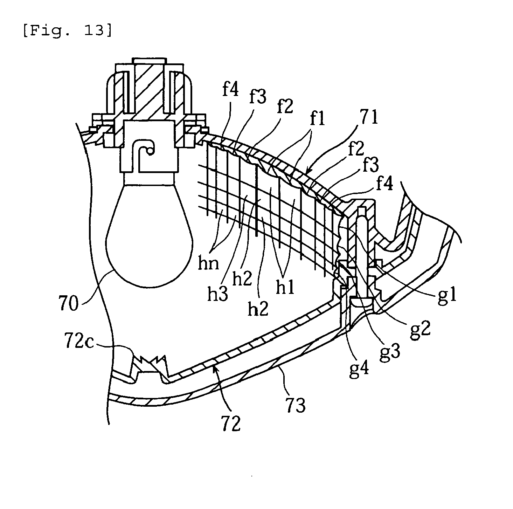

Figs. 12 and 13 are views illustrating a tail light according to a second embodiment. The second embodiment is an example of a construction, in which a single reflector 72 brings about a change in flux density (light intensity).

As shown in Figs. 12 and 13, the reflector 72 is formed with a plurality of longitudinal reflective surfaces f1 to f4, which define longitudinally extending convex ridges, and a plurality of lateral reflective surfaces g1 to g4, which define laterally extending convex ridges, whereby intersecting portions h1, ..., hn are formed to be different in effective area. The respective intersecting portions h1, ..., hn partitioned by the longitudinal and lateral reflective surfaces f1 to f4, g1 to g4 are structured so that the intersecting portion h1 positioned close to the set points a, a distant from the lamp bulb 70 is made larger in area than the intersecting portions h2, ..., hn positioned further distant therefrom.

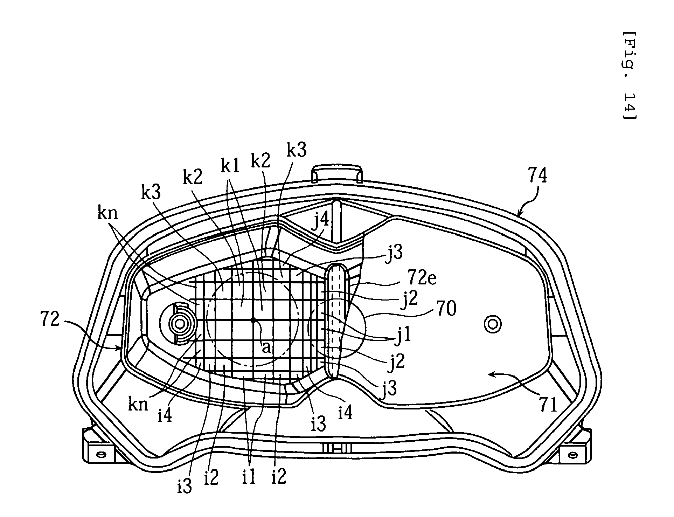

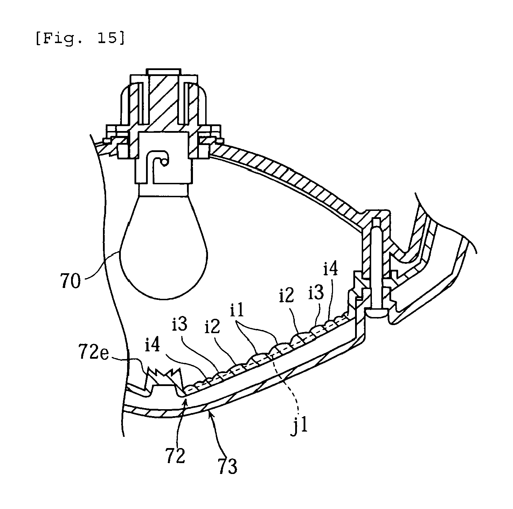

Figs. 14 and 15 are views illustrating a tail light according to a third embodiment. The third embodiment is an example of a construction, in which a single inner lens 72 brings about a change in flux density (light intensity).

As shown in Figs. 14 and 15, the inner lens 72 is formed with a plurality of longitudinal, light transmitting surfaces i1 to i4, which define longitudinally extending convex ridges, and a plurality of lateral, light transmitting surfaces j1 to j4, which define laterally extending convex ridges, whereby intersecting portions k1, ..., kn are formed to be different in effective area. The respective intersecting portions k1, ..., kn partitioned by the longitudinal and lateral, light transmitting surfaces i1 to i4, j1 to j4 are structured so that the intersecting portion k1 positioned close to the set points a, a distant from the lamp bulb 70 is made larger in effective area than the intersecting portions k2, ..., kn positioned further distant therefrom. In this manner, substantially the same effect as that in the embodiment is produced in the case where either of the reflector 71 and the inner lens 72 adopts a construction, in which a change in flux density is caused.

In addition, while the embodiments have been described with respect to the case where reflective surfaces of the reflector 71 and light transmitting surfaces of the inner lens 72 comprise convex ridges, they can comprise concave ridges.

Also, while the embodiments have been described with respect to the case where the embodiments are applied to a tail light of a motorcycle, the lamp according to the technical teaching is applicable to a head light and also to a lighting device adopted in automobiles.

The description above discloses (amongst others), an embodiment of a lighting device, in particular for a vehicle, comprising a light source and a light separating means which is configured to separate light from the light source into at least one set point different from the light source, said set point having a higher light intensity than a surrounding area and appearing as center of an imaginary light source.

Further, the description above discloses an embodiment of a lamp comprising a bulb, which makes a light source, a reflector, by which light from the bulb is reflected in a predetermined direction, and a lens, through which the reflected light is permitted to transmit, and wherein radiant energy (flux density) passing through a unit area in a unit time is varied about a set point, which is distant from the bulb, according to a distance from the set point.

Since the lamp according to the embodiment is constructed so that light from the bulb is varied in flux density about a set point, which is distant from the bulb, according to a distance from the set point, the set point distant from the bulb looks to be a light source. Thereby, an outward appearance, in which light sources seem to be present in a plurality of locations and which is not present in the relates art, can be obtained with, for example, one bulb, so that an improvement in visibility and outward appearance can be achieved without causing an increase in cost and making the lamp large in size.

According to a preferred aspect of the embodiment, flux density becomes maximum at the set point.

According to another aspect, the lamp preferably comprises a light shielding portion provided on that portion of the lens, which is opposed to the bulb, to lower light transmittance relative to that in other portions.

According to a preferred aspect, the set points are provided on both sides to interpose the light shielding portion.

According to a preferred aspect, the lamp comprises a tail light arranged on a vehicle body rear end of a vehicle.

Preferably to the aspects above, in another aspect the set points are provided on both sides in a vehicle width direction to interpose the light shielding portion.

According to another preferred aspect, at least one of the reflector and the lens realizes a construction, which varies the flux density according to a distance from the set point.

Preferably to the aspects above, in another aspect the reflector comprises a plurality of partitioned reflective surfaces composed of convex or concave ridges and the respective reflective surfaces are structured so that the reflective surface positioned close to the set point is larger in effective area than the reflective surface positioned distant therefrom.

According to still a further preferred aspect, the lens comprises a plurality of partitioned light transmitting surfaces composed of convex or concave ridges and the respective light transmitting surfaces are structured so that the light transmitting surface positioned close to the set point is larger in effective area than the light transmitting surface positioned distant therefrom.

Preferably to the aspects above, in another aspect a combination of the reflector and the lens realizes a construction, which varies the flux density according to a distance from the set point.

Further, preferably to the aspects above, in another aspect the reflector is formed with a plurality of longitudinally or laterally extending reflective surfaces composed of convex or concave ridges, the lens is formed with a plurality of laterally or longitudinally extending light transmitting surfaces composed of convex or concave ridges, and the convex or concave ridges on the reflective surfaces and the light transmitting surfaces are structured so that intersecting portion of the convex or concave ridges positioned close to the set point is larger in area than intersecting portion of the convex or concave ridges positioned distant therefrom.

Moreover, it is disclosed that a preferred motorcycle comprising a tail light is composed of the lamp according to any one of the previous aspects.

In order to provide a lamp, in which an improvement in visibility and outward appearance can be achieved without causing an increase in cost and making a light body large in size, and a motorcycle provided with the lamp, the description above discloses a particularly preferred embodiment of a tail light (lamp) comprising a bulb, which makes a light source, a reflector, by which light from the bulb is reflected in a predetermined direction, and a lens, through which the reflected light is permitted to transmit, and wherein flux density is varied about a set point a, which is distant from the bulb, according to a distance from the set point.

## Claims

1. Lighting device, in particular for a vehicle, comprising a light source (70) and a light separating means which is configured to separate light from the light source (70) into at least one set point (a) different from the light source (70), said set point (a) having a higher light intensity than a surrounding area and appearing as center of an imaginary light source (e).

2. Lighting device according to claim 1, wherein the light separating means is configured to separate light from the light source (70) mainly into at least two different set points (a,a) which appear as centers of two different imaginary light sources (e,e), each of the set points (a,a) having a higher light intensity than the surrounding area.

3. Lighting device according to claim 1 or 2, wherein the light separating means comprises a reflector (71), by which light from the light source (70) is reflected, and/or a lens (72), through which light is transmitted, such that the light intensity decreases form the set point (a) of an imaginary light source (e) towards an outer area of said imaginary light source (e).

4. Lighting device according to claim 3, wherein a light shielding portion (72c) is provided on a portion of the lens (72), and said light shielding portion (72c) is opposed to the light source (70) so as to lower light transmittance relative to other portions of the lens (72).

5. Lighting device according to claim 4, wherein the light source (70) and the light shielding portion (72c) are separated from each other in longitudinal direction, the two set points (a,a) are separated from each other in radial direction, and the light shielding portion (72c) is interposed between the set points (a,a).

6. Lighting device according to at least one of the claims 3 to 5, wherein the reflector (71) comprises a plurality of partitioned reflective surfaces (f1-f4,g1-g4) composed of convex or concave ridges and the respective reflective surfaces are structured so that a reflective surface (f1,g1) positioned close to the set point (a) is larger in effective reflective area than a reflective surface positioned distant from the set point (a).

7. Lighting device according to at least one of the claims 3 to 6, wherein the lens (72) comprises a plurality of partitioned light transmitting surfaces (i1-i4,j1-j4) composed of convex or concave ridges and the respective light transmitting surfaces are structured so that a light transmitting surface (i1,j1) positioned close to the set point (a) is larger in effective light transmitting area than a light transmitting surface positioned distant from the set point (a).

8. Lighting device according to claim 6 or 7, wherein convex or concave ridges of the respective reflective surfaces or of the respective light transmitting surfaces extend longitudinally and laterally so as to form intersecting portions (h1,...,hn,k1,...,kn) with different effective areas, and an intersecting portion (h1,k1) close to the set point (a) is larger in effective area than an intersecting portion distant from the set point (a).

9. Lighting device according to at least one of the claims 3 to 5, wherein a combination of the reflector (71) and the lens (72) is constructed to set the light intensity according to a distance from the set point (a).

10. Lighting device according to claim 9, wherein the reflector (71) is formed with a plurality of longitudinally or laterally extending reflective surfaces (b1-b4,b1',b4') composed of convex or concave ridges, the lens (72) is formed with a plurality of laterally or longitudinally extending light transmitting surfaces (c1-c4,c1'-c4') composed of convex or concave ridges, and the convex or concave ridges on the reflective surfaces (b1-b4,b1'-b4') and the light transmitting surfaces (c1-c4,c1'-c4') are structured so that intersecting portions (d1) of the convex or concave ridges positioned close to the set point (a) are larger in effective reflective and light transmitting area than intersecting portions of the convex or concave ridges positioned distant from the set point (a).

11. Vehicle, in particular motorcycle, having a tail light comprising a lighting device according to one of the claims 1 to 10.

12. Vehicle according to claim 11, wherein two set points (a,a) are provided on both sides of the light shielding portion (72c) in a vehicle width direction such that both set points (a,a) interpose said light shielding portion (72c).
